Europäisches Patentamt

European Patent Office

Office européen des brevets

(11) Numéro de publication: **0 049 199**
**A1**

## (12) DEMANDE DE BREVET EUROPEEN

(21) Numéro de dépôt: **81401483.3**

(22) Date de dépôt: **24.09.81**

(51) Int. Cl.³: **F 16 D 1/08**

(30) Priorité: **26.09.80 FR 8020717**

(71) Demandeur: **THOMSON-CSF, 173, Boulevard Haussmann, F-75360 Paris Cedex 08 (FR)**

(43) Date de publication de la demande: **07.04.82**
**Bulletin 82/14**

(72) Inventeur: **Bresson, Roger, THOMSON-CSF SCPI 173, bld. Haussmann, F-75360 Paris Cedex 08 (FR)**
Inventeur: **Lafarge, Guy, THOMSON-CSF SCPI 173, bld. Haussmann, F-75360 Paris Cedex 08 (FR)**

(84) Etats contractants désignés: **AT DE GB IT**

(74) Mandataire: **Meslin, Suzanne et al, THOMSON-CSF SCPI 173, bld Haussmann, F-75360 Paris Cedex 08 (FR)**

(54) **Dispositif d'assemblage sur un arbre moteur d'une pièce à entraîner et ensemble tournant comportant un tel dispositif d'assemblage.**

(57) Dispositif permettant d'assembler simplement et efficacement un élément (11) tel qu'une poulie sur un arbre (10) moteur à l'aide d'une rondelle tronconique (12) dont le redressement, après mise en place dans l'extrémité creuse (16) de l'arbre (10), assure un blocage de la poulie (11) sur l'arbre (10) et un couple résistant permettant la transmission du couple moteur.

Application notamment aux poulies entraînant le tambour tournant de machines à traiter le linge.

# DISPOSITIF D'ASSEMBLAGE SUR UN ARBRE MOTEUR D'UNE PIECE A ENTRAINER, ET ENSEMBLE TOURNANT COMPORTANT UN TEL DISPOSITIF D'ASSEMBLAGE

La présente invention concerne un dispositif d'assemblage sur un arbre moteur, d'une pièce à entraîner, poulie par exemple, l'assemblage devant être suffisamment efficace pour que, d'une part la poulie soit convenablement maintenue sur l'arbre et que, d'autre part, le couple moteur de l'arbre soit complètement transmis à la poulie. Elle concerne également des ensembles tournant assemblés à l'aide d'un tel dispositif.

Le problème de l'assemblage d'une pièce sur un arbre moteur est à l'heure actuelle résolu par différentes solutions permettant une solidarisation complète entre l'arbre et la pièce qu'il doit entraîner ; ces solutions sont par exemple l'utilisation de soudures, brasage ou fixations mécaniques complexes. Elles sont généralement assez coûteuses et compliquées à mettre en oeuvre.

Il est ainsi connu par le brevet français N° 2 114 130 d'utiliser, pour la fixation rigide d'un élément sur un arbre, un anneau métallique de forme conique présentant sur ses circonférences intérieures et extérieures des dents capables de s'ancrer radialement sur les surfaces cylindriques respectives de l'élément à entraîner et de l'arbre qui le porte lorsque l'anneau, placé entre ces surfaces, est soumis à une pression axiale qui le déforme de façon permanente.

Il est également connu par la demande de brevet en Allemagne P 28 08 690 d'utiliser, pour le blocage d'un élément emmanché à l'extrémité d'un arbre, un noyau écarteur placé dans la partie creuse de cette extrémité de l'arbre, ce noyau écarteur comportant un anneau fendu présentant intérieurement des surfaces coniques d'inclinaisons opposées, et des anneaux de pression disposés à l'intérieur de l'anneau fendu et destinés à glisser en sens opposés le long de ces surfaces coniques de façon à venir pousser radialement sur la paroi intérieure de la partie creuse de l'arbre et bloquer ainsi l'élément sur l'arbre.

La présente invention propose un dispositif d'assemblage particulièrement simple à réaliser et à mettre en oeuvre tout en ayant une excellente efficacité ; elle permet une réduction notable des coûts de fabrication des ensembles ainsi assemblés.

Selon l'invention, un dispositif d'assemblage d'un élément à entraîner sur un arbre moteur comportant au moins une extrémité creuse, l'élément venant s'emmancher sur cette extrémité creuse, ce dispositif, qui comprend un organe d'expansion, placé dans cette extrémité creuse et destiné à dilater radialement cette extrémité afin que l'élément soit monté serré et bloqué sur l'extrémité creuse de l'arbre, est caractérisé en ce que l'organe d'expansion est une rondelle métallique tronconique susceptible d'être redressée et déformée de façon permanente sous l'effet de pressions temporaires parallèles à l'axe de l'arbre.

Le dispositif de l'invention est utilisable aussi bien pour des arbres creux que pour des arbres pleins ; les usinages à réaliser tant sur l'arbre que sur la pièce qui doit lui être assemblée sont très simples à effectuer puisque ce sont uniquement, comme on le verra plus loin, des opérations de tournage qui peuvent être faites directement lors de la fabrication de l'arbre et de la pièce ; ils ne nécessitent pas de reprise des pièces, ce qui économise du temps et diminue les coûts.

En particulier, le dispositif suivant l'invention comporte un organe d'extension, et donc de blocage, de forme simple comparée au noyau écarteur de la demande en Allemagne P 28 08 696 ou même à l'anneau métallique de forme conique du brevet français N° 2 114 130, anneau qui est muni de dents sur ses circonférences intérieures et extérieures, la présence de dents sur la circonférence extérieure et plus encore sur la circonférence intérieure de la rondelle de blocage du dispositif suivant l'invention n'étant pas utile.

D'autres objets, caractéristiques et résultats de l'invention ressortiront de la description suivante donnée à titre d'exemple non limitatif et illustrée par les figures annexées qui représentent :

- les figures 1 et 2 des vues en coupe d'un ensemble tournant conforme à l'invention, respectivement avant et après assemblage, dans le cas d'un arbre creux ;

- la figure 3, une vue en coupe d'un ensemble tournant conforme à l'invention, assemblé, dans le cas d'un arbre plein.

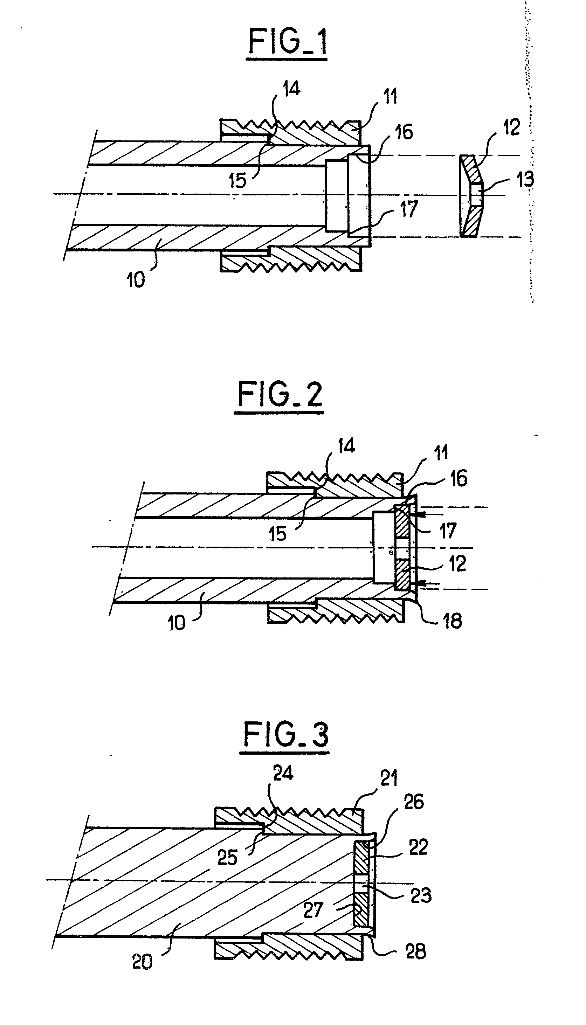

On voit sur la figure 1, emmanchés mais non encore assemblés, un arbre moteur 10 sur lequel est monté un élément 11, tel qu'une poulie par exemple, à laquelle doit être transmis le couple moteur.

L'arbre 10 est ici un arbre creux ; la poulie 11 est par exemple une poulie d'entraînement de tambour de machine de traitement du linge, machine à laver ou séche-linge notamment, mais il est bien entendu que le dispositif d'assemblage de l'invention peut s'appliquer à tout ensemble tournant dans lequel le couple moteur d'un arbre tournant doit être transmis à une pièce emmanchée sur lui.

Le dispositif d'assemblage de l'invention comporte une rondelle 12 de blocage constituée d'une partie périphérique tronconique et d'un évidement central 13.

La poulie 11 vient s'emmancher, libre ou légèrement serrée, sur l'arbre 10 et est retenue longitudinalement par un épaulement 14 qui vient s'appuyer sur un épaulement 15 correspondant pratiqué sur la périphérie de l'arbre 10. Le positionnement de ces deux épaulements 14, 15 est tel que l'extrémité 18 de l'arbre creux dépasse de la poulie 11.

L'arbre 10 comporte à son extrémité une partie creuse 16 à paroi mince et un épaulement 17 circulaire tel que, d'une part, le diamètre interne de la partie creuse 16 de l'extrémité de l'arbre 10 soit légèrement supérieur au diamètre externe de la rondelle 12 qui va venir se loger dans cette partie creuse 16 et tel que, d'autre part, la rondelle 12 une fois appliquée contre l'épaulement 17, soit "à cheval" sur une portion de la partie creuse 16 entourée par la poulie 11 et sur une partie 18 de cette partie creuse 16 dépassant cette poulie 11.

Lorsque la rondelle 12 est en place contre l'épaulement 17, il suffit de provoquer son redressement en lui appliquant une force axiale extérieure suffisante pour réaliser, par de sa déformation permanente, le blocage de la poulie 11 sur l'arbre 10, cette
rondelle 12 aplatie ayant alors deux fonctions, une fonction de
blocage longitudinal de la poulie 11 sur l'arbre 10, et une fonction de
serrage interne de l'arbre 10 contre la poulie 11 produisant le couple
résistant nécessaire à la bonne transmission du couple moteur.

En effet, deux phénomènes se produisent au moment du
redressement de la rondelle 12 .

D'une part, la force radiale exercée par la rondelle 12 sur la
partie creuse 16 de l'arbre 10 déforme cette partie 16 qui augmente
légèrement de diamètre ; la poulie 11 est alors immobilisée longitudinalement entre l'épaulement 15 et la partie 18 de la partie
creuse 16, dépassant la poulie 11 et qui s'est évasée, comme montré
en figure 2.

D'autre part, la force radiale exercée par la rondelle 12 sur la
partie creuse 16 entourée par la poulie 11 provoque un serrage
interne de l'arbre 10 contre la poulie 11 suffisamment important
pour que soit obtenu le couple résistant nécessaire à la bonne
transmission du couple moteur.

La figure 3 représente un arbre plein 20 sur lequel une poulie
21 est assemblée par le dispositif d'assemblage qui vient d'être
décrit.

Au moment de l'usinage, il a été prévu à l'extrémité de cet
arbre 20 un alésage 26 destiné à procurer à une rondelle 22 le
logement "à cheval" préalablement décrit. La rondelle 22, une fois
placée contre un épaulement 27 formé par le fond de l'alésage est
redressée (comme représentée sur la figure 3) et le blocage de la
poulie 21 est réalisé comme décrit précédemment. La partie de
l'alésage 26 placée sous la poulie 21 se dilate sous la poussée radiale
de la rondelle 22 et vient bloquer la poulie 21 sur l'arbre 20, tandis
que l'extrémité 28 de l'alésage 26 qui se trouve au-delà de la poulie
21 se déforme vers l'extérieur (figure 3) assurant une immobilisation
longitudinale de la poulie 21 sur l'arbre 20.

## REVENDICATIONS

1. Dispositif d'assemblage d'un élément (11) à entraîner sur un arbre (10) moteur comportant au moins une extrémité creuse, l'élément (11) venant s'emmancher sur cette extrémité creuse, ce dispositif, qui comprend un organe d'expansion placé dans cette extrémité creuse et destiné à dilater radialement cette extrémité afin que l'élément (11) soit monté serré et bloqué sur l'extrémité creuse de l'arbre (10), étant caractérisé en ce que l'organe d'expansion est une rondelle (12) métallique tronconique susceptible d'être redressée et déformée de façon permanente sous l'effet de pressions temporaires parallèles à l'axe de l'arbre (10).

2. Ensemble tournant comportant un arbre (10, 20) moteur et un élément (11, 21) à entraîner, caractérisé en ce que l'assemblage est réalisé par un dispositif suivant la revendication 1.

3. Ensemble tournant suivant la revendication 2, caractérisé en ce que l'extrémité creuse (16) de l'arbre (10) présente un épaulement (17) contre lequel vient en appui la rondelle (12) de blocage.

4. Ensemble tournant suivant la revendication 2, caractérisé en ce que l'arbre (10, 20) est muni à sa périphérie, au voisinage de l'extrémité creuse (16), d'un épaulement (15) circulaire destiné à positionner longitudinalement l'élément (11 ou 21) sur l'arbre (10 ou 20).

5. Ensemble tournant suivant la revendication 4, caractérisé en ce que l'élément (11) annulaire est muni intérieurement d'un épaulement (14) circulaire destiné à coopérer avec l'épaulement (15) de l'arbre (10 ou 20) pour le positionnement longitudinal de l'élément (11 ou 21) sur l'arbre (10 ou 20).

6. Ensemble tournant suivant l'une quelconque des revendications 2 à 5, caractérisé en ce que l'élément (11 ou 21) vient s'emmancher sur l'extrémité creuse (16) de l'arbre (10 ou 20) de manière qu'une partie (18) de cette extrémité creuse (16) dépasse l'élément (11 ou 21) et en ce que la rondelle (12) vient se loger dans la partie creuse (16) d'extrémité de manière à se trouver "à cheval"

0049199

sur la partie creuse (16) entourée de l'élément (11 ou 21) et sur la partie 18 dépassant l'élément (11 ou 21) de sorte que, sous l'effet de la poussée radiale de la rondelle (12), cette partie (18) se dilate et assure, d'une part, l'immobilisation longitudinale de l'élément (11 ou 21) entre l'épaulement (15) et la partie (18) dilatée et, d'autre part, le blocage de l'élément (11 ou 21) sur l'arbre (10 ou 20).

7. Ensemble tournant suivant l'une quelconque des revendications 2 à 6, caractérisé en ce que l'arbre (20) est plein et son extrémité (26) sur laquelle doit être assemblée l'élément (21) à entraîner est creusée sur une profondeur déterminée, la rondelle (12), lorsqu'elle est redressée, venant s'appliquer sur le fond (27) de la partie creusée (26) qui forme un épaulement, en ce que l'élément (21) et l'arbre (20) sont munis respectivement d'épaulements (24, 25) complémentaires qui coopèrent pour assurer le positionnement longitudinal de l'élément (21) sur l'arbre (20) de telle sorte que la rondelle (12) lorsqu'elle est redressée se trouve positionnée "à cheval" sur la partie de l'extrémité creuse (26) entourée de l'élément (21) et sur une partie (28) de l'extrémité creusée (26) dépassant l'élément (21), de sorte que, sous l'effet de la poussée radiale de la rondelle (12), cette partie (28) se dilate, assurant l'immobilisation longitudinale de l'élément (21) dont l'épaulement (24) se trouve en butée sur l'épaulement (25) de l'arbre (20), et le blocage de l'élément (21) sur l'arbre (20) par l'augmentation du diamètre de l'arbre (20) au niveau de l'élément (21).

8. Ensemble tournant suivant l'une quelconque des revendications 2 à 7, caractérisé en ce que l'élément (11 ou 21) est une poulie.

9. Ensemble tournant suivant la revendication 7, caractérisé en ce que la poulie (11 ou 21) ainsi assemblée sur l'arbre (10, 20) moteur entraîne en rotation un tambour de machine de traitement du linge.

0049199

FIG_1

FIG_2

FIG_3

# RAPPORT DE RECHERCHE EUROPEENNE

**Office européen des brevets**

**0049199**

Numéro de la demande

EP 81 40 1483

## DOCUMENTS CONSIDERES COMME PERTINENTS

| Catégorie | Citation du document avec indication, en cas de besoin, des parties pertinentes | Revendication concernée |
|---|---|---|
| | GB - A - 764 639 (IBM) <br> * En entier * | 1,2 |
| D | DE - A - 2 808 696 (GOETZE AG) <br> * Page 8, figure 3 * | 1-4,7 |
| D | FR - A - 2 114 130 (DUCELLIER) <br> * En entier * | 1-3 |
| A | FR - A - 1 092 416 (NEYPRIC) | |
| A | DE - C - 849 942 (RICARDO) | |
| A | GB - A - 276 000 (HOFFMAN) | |
| A | GB - A - 274 954 (LANGE) | |

**CLASSEMENT DE LA DEMANDE (Int. Cl.³)**

F 16 D 1/08

**DOMAINES TECHNIQUES RECHERCHES (Int. Cl.³)**

F 16 D 1/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 06-11-1981 | BALDWIN |

OEB Form 1503.1 06.78